# EUROPEAN PATENT APPLICATION

(11) **EP 3 881 929 A1**
(43) Date of publication of application: **22.09.2021**
(21) Application number: 19905954.4
(22) Date of filing: 20.12.2019
(51) Int. Cl.: B01J 4/00, B01D 53/50, B01D 53/80, F23J 15/04

(54) **FLUID DELIVERY APPARATUS AND METHOD FOR MODIFYING FLUID DELIVERY APPARATUS**

(30) Priority: 27.12.2018 JP 2018243969
(71) Applicant: Mitsubishi Power, Ltd., Nishi-ku, Yokohama-shi Kanagawa 220-8401 (JP)
(72) Inventor: KANNO, Shoichi, Yokohama-shi, Kanagawa 220-8401 (JP); KAGAWA, Seiji, Yokohama-shi, Kanagawa 220-8401 (JP); TANAKA, Yoshito, Yokohama-shi, Kanagawa 220-8401 (JP); TAKEUCHI, Yasuhiro, Yokohama-shi, Kanagawa 220-8401 (JP)
(74) Representative: Studio Torta S.p.A.
(86) International application number: PCT/JP2019/050172
(87) International publication number: WO 2020/137910

(57) **Abstract**

This fluid delivery apparatus is configured to deliver, to a plurality of delivery destinations, a slurry liquid that is to be brought into contact with exhaust gas discharged from a combustion apparatus, the fluid delivery apparatus being provided with: a first delivery line for delivering the slurry liquid from a delivery source to a first delivery destination; a return line which branches off from the first delivery line at a first bifurcation part so as to return the slurry liquid to the delivery source; a second delivery line which branches off from the return line at a second bifurcation part so as to deliver the slurry liquid to a second delivery destination that is different from the first delivery destination; and a delivery destination switching device which is configured to be capable of switching the delivery destination of the slurry liquid flowing in the return line on the upstream side of the second bifurcation part either to a point in the return line downstream of the second bifurcation part or to the second delivery line.

## Description

### TECHNICAL FIELD

The present disclosure relates to a fluid delivery apparatus configured to deliver a slurry liquid to be brought into contact with exhaust gas discharged from a combustion device to at least one delivery destination, and to a method for modifying the fluid delivery apparatus.

### BACKGROUND

Exhaust gas discharged from a combustion engine such as a boiler contains air pollutants such as SOx (sulfur oxide). As a method for reducing SOx contained in exhaust gas, there may be mentioned a wet desulfurization method in which substances such as SO₂ (sulfur dioxide) are removed by a liquid substance such as an alkaline aqueous solution or slurry containing alkaline components.

As a desulfurization device used in the wet desulfurization method, an absorption tower is known which is configured to bring exhaust gas into contact with a limestone slurry containing alkaline components to scrub the exhaust gas (see for example, Patent Document 1). Patent Document 1 discloses a limestone slurry line for delivering a limestone slurry from a limestone slurry tank to an absorption tower, a regulating valve disposed in the limestone slurry line, and a return line, branching off before the regulating valve in the limestone slurry line, for returning the limestone slurry to the limestone slurry tank.

The amount of limestone slurry supplied to the absorption tower fluctuates depending on the desulfurization load. For example, when the fuel has a low sulfur content or the load of the combustion device is low, since the desulfurization load of the absorption tower is low, the amount of limestone slurry supplied to the absorption tower (supply flow rate) decreases. When the supply amount to the absorption tower decreases, the flow velocity of limestone slurry flowing in the limestone slurry line decreases, and solids in the limestone slurry may deposit in the limestone slurry line. The solids in the limestone slurry may adhere to the regulating valve and reduce the responsiveness of the regulating valve.

In the case where the supply amount required in the absorption tower is small, by decreasing the opening degree of the regulating valve, and flowing more limestone slurry than the required supply amount into the limestone slurry line and returning the excess limestone slurry to the limestone slurry tank via the return line, the flow velocity of limestone slurry in the limestone slurry line is prevented from falling below a predetermined speed. The slurry line for a slurry liquid, not only the limestone slurry, is provided with the return line as described above.

### Citation List

### Patent Literature

Patent Document 1: JP2005-334770A

### SUMMARY

### Problems to be Solved

In recent years, there has been a trend toward tighter regulations on emissions of air pollutants such as sulfur oxides and soot. One way to reduce emissions of air pollutants is to use high quality fuel with a low sulfur content in combustion engines. However, since the high-quality fuel is expensive, there is a desire to use low-cost fuel, even with a somewhat high sulfur content, in order to reduce the operating cost. When fuel with a high sulfur content is used in a combustion engine, a larger amount of limestone slurry is required to treat exhaust gas discharged from the combustion engine than when fuel with a low sulfur content is used, so that the facility (fluid delivery facility) to deliver the limestone slurry to the absorption tower may become larger.

The return line is designed to control the deposition of solids in the slurry liquid in the slurry line, but it is not really used for other purposes. Incidentally, Patent Document 1 discloses that the exhaust pipe is scrubbed by spraying the limestone slurry through a spraying device disposed at the end of a branch from the return line.

In view of the above, an object of at least one embodiment of the present invention is to provide a fluid delivery apparatus that can prevent enlargement by utilizing the return line.

### Solution to the Problems

(1) A fluid delivery apparatus according to at least one embodiment of the present invention is configured to deliver a slurry liquid to be brought into contact with exhaust gas discharged from a combustion device to a plurality of delivery destinations, and comprises: a first delivery line for delivering the slurry liquid from a delivery source to a first delivery destination; a return line, branching off from the first delivery line at a first bifurcation part, for returning the slurry liquid to the delivery source; a second delivery line, branching off from the return line at a second bifurcation part, for delivering the slurry liquid to a second delivery destination different from the first delivery destination; and a delivery destination switching device configured to able to switch a delivery destination of the slurry liquid flowing on an upstream side of the second bifurcation part in the return line to a downstream side of the second bifurcation part in the return line or to the second delivery line.
   With the above configuration (1), the fluid delivery apparatus provided with the second delivery line and the delivery destination switching device can deliver the slurry liquid flowing on the upstream side of the second bifurcation part in the return line to the second delivery destination different from the first delivery destination. In other words, it is possible to increase the number of delivery destinations of the slurry liquid flowing through the return line and deliver the slurry liquid flowing through the return line to the increased destinations.
   Further, with the above configuration, since the number of delivery destinations of the slurry liquid flowing through the return line can be increased by the second delivery line branching off from the return line and the delivery destination switching device, it is possible to prevent enlargement of the fluid delivery apparatus. Additionally, since the slurry liquid can be delivered from the same delivery source to multiple destinations of the slurry liquid, the number of sources of the slurry liquid can be reduced, which in turn prevents enlargement of the fluid delivery apparatus.
(2) In some embodiments, the delivery destination switching device described in the above (1) further comprises a washing line configured to deliver a washing liquid to the second delivery line.
   When the delivery destination of the slurry liquid flowing through the return line is switched by the delivery destination switching device to the delivery source of the slurry liquid, the slurry liquid remaining in the second delivery line may settle. The settling of the slurry liquid remaining in the second delivery line may lead to blockage of the second delivery line and an increase in pressure loss.
   With the above configuration (2), the washing liquid is delivered to the second delivery line by the washing line to forcibly discharge the slurry liquid remaining in the second delivery line, so that the slurry liquid remaining in the second delivery line is prevented from settling, which in turn prevents blockage of the second delivery line and an increase in pressure loss.
(3) In some embodiments, in the delivery destination switching device described in the above (1) or (2), the second delivery line includes at least one concave portion at which a slope of the second delivery line changes from downward to upward, and the fluid delivery apparatus further comprises a drain line connecting the at least one concave portion and a portion of the second delivery destination at a height lower than the concave portion.
   The concave portion at which the slope of the second delivery line changes from downward to upward is where the slurry liquid tends to settle, causing blockage of the second delivery line and an increase in pressure loss. With the above configuration (3), with the drain line connecting the concave portion and a portion of the second delivery destination at a height lower than the concave portion, by using the difference in height between the concave portion and the portion of the second delivery destination lower than the concave portion, the slurry liquid in the concave portion can be delivered to the second delivery destination through the drain line by the weight of the slurry liquid. Thus, with the above configuration, it is possible to suppress settling of the slurry liquid at the concave portion where the slurry liquid tends to settle, thus effectively preventing blockage of the second delivery line and an increase in pressure loss.
(4) In some embodiments, in the delivery destination switching device described in the above (1) or (2), the second delivery line has a downward slope from the second bifurcation part to the second delivery destination.
   With the above configuration (4), since the second delivery line has a downward slope from the second bifurcation part to the second delivery destination, by using the difference in height between the second bifurcation part and the second delivery destination, the slurry liquid remaining in the second delivery line can be delivered to the second delivery destination by the weight of the slurry liquid. Further, with the above configuration, even without a device for forcibly discharging the slurry liquid from the second delivery line like the washing line, the slurry liquid can be discharged from the second delivery line, so that it is possible to prevent enlargement of the fluid delivery apparatus.
(5) In some embodiments, in the fluid delivery apparatus described in any one of the above (1) to (4), the first delivery destination includes a first absorption tower, and the second delivery destination includes a second absorption tower different from the first absorption tower, or a second storage device configured to store the slurry liquid to be delivered to the second absorption tower.
   With the above configuration (5), the slurry liquid to be delivered to the first absorption tower can be delivered to the second absorption tower (or the second storage device) different from the first absorption tower. If there is a device for delivering the slurry liquid to the second absorption tower (or the second storage device) separately from the fluid delivery apparatus, the fluid delivery apparatus can be used as a backup for this device. By using the fluid delivery apparatus as a backup for this device, the reliability of the exhaust gas desulfurization system equipped with the absorption tower and the fluid delivery apparatus can be improved. In addition, since the necessity of a separate spare unit for the device is eliminated, it is possible to prevent enlargement of the exhaust gas desulfurization system.
(6) In some embodiments, in the fluid delivery apparatus described in any one of the above (1) to (4), the first delivery destination includes a first separation device configured to separate a product produced in a first absorption tower from the slurry liquid, or a third storage device configured to store the slurry liquid to be delivered to the first separation device, and the second delivery destination includes a second separation device configured to separate a product produced in a second absorption tower different from the first absorption tower from the slurry liquid, or a fourth storage device configured to store the slurry liquid to be delivered to the second separation device.
   With the above configuration (6), the slurry liquid to be delivered to the first separation device (or the third storage device) can be delivered to the second separation device (or the fourth storage device) different from the first separation device. Thus, the second separation device can be used as a backup for the first separation device. By using the second separation device as a backup for the first separation device, the reliability of the exhaust gas desulfurization system equipped with the separation device and the fluid delivery apparatus can be improved. In addition, since the necessity of a separate separation device is eliminated, it is possible to prevent enlargement of the exhaust gas desulfurization system.
(7) In some embodiments, in the fluid delivery apparatus described in any one of the above (1) to (4), the first delivery destination includes a separation device configured to separate a product produced in an absorption tower from the slurry liquid, or a fifth storage device configured to store the slurry liquid to be delivered to the separation device, and the second delivery destination includes a sixth storage device different from the fifth storage device and configured to store the slurry liquid to be delivered to the separation device.
   With the above configuration (7), the slurry liquid to be delivered to the separation device (or the fifth storage device) can be delivered to the sixth storage device. The sixth storage device is configured to store the slurry liquid to be delivered to the separation device, as with the fifth storage device. Thus, the sixth storage device can be used as a backup for the fifth storage device. By using the sixth storage device as a backup for the fifth storage device, the reliability of the exhaust gas desulfurization system equipped with the separation device and the fifth storage device can be improved.
(8) A method for modifying a fluid delivery apparatus according to at least one embodiment of the present invention is to modify a fluid delivery apparatus configured to deliver a slurry liquid to be brought into contact with exhaust gas discharged from a combustion device to at least one delivery destination. The fluid delivery apparatus comprises: a first delivery line for delivering the slurry liquid from a delivery source to a first delivery destination; and a return line, branching off from the first delivery line at a first bifurcation part, for returning the slurry liquid to the delivery source. The method comprises: a second delivery line addition step of additionally installing a second delivery line, branching off from the return line at a second bifurcation part, for delivering the slurry liquid to a second delivery destination different from the first delivery destination; and a delivery destination switching device addition step of additionally installing a delivery destination switching device configured to able to switch a delivery destination of the slurry liquid flowing on an upstream side of the second bifurcation part in the return line to a downstream side of the second bifurcation part in the return line or to the second delivery line.

With the above method (8), by the second delivery line installed in the second delivery line addition step and the delivery destination switching device installed in the delivery destination switching device addition step, the slurry liquid flowing on the upstream side of the second bifurcation part in the return line can be delivered to the second delivery destination different from the first delivery destination. In other words, it is possible to increase the number of delivery destinations of the slurry liquid flowing through the return line and deliver the slurry liquid flowing through the return line to the increased destinations. Thus, with the above method, since the number of delivery destinations of the slurry liquid flowing through the return line can be increased by the second delivery line addition step and the delivery destination switching device addition step, it is possible to easily perform modification and prevent enlargement of the fluid delivery apparatus.

### Advantageous Effects

At least one embodiment of the present invention provides a fluid delivery apparatus that can prevent enlargement by making the use of a slurry liquid delivered to the return line.

### BRIEF DESCRIPTION OF DRAWINGS

FIG. 1 is a schematic configuration diagram of an exhaust gas desulfurization device.
FIG. 2 is a schematic configuration diagram of an exhaust gas desulfurization system including a fluid delivery apparatus according to a first embodiment.
FIG. 3 is a schematic configuration diagram of an exhaust gas desulfurization system including a fluid delivery apparatus according to a first modification of the first embodiment.
FIG. 4 is a schematic configuration diagram of an exhaust gas desulfurization system including a fluid delivery apparatus according to a second modification of the first embodiment.
FIG. 5 is a schematic configuration diagram of an exhaust gas desulfurization system including a fluid delivery apparatus according to a third modification of the first embodiment.
FIG. 6 is a cross-sectional view showing a schematic configuration of connection between a drain line and a second delivery line for describing the drain line.
FIG. 7 is a schematic configuration diagram of an exhaust gas desulfurization system including a fluid delivery apparatus according to a fourth modification of the first embodiment.
FIG. 8 is a schematic configuration diagram of an exhaust gas desulfurization system including a fluid delivery apparatus according to a second embodiment.
FIG. 9 is a schematic configuration diagram of an exhaust gas desulfurization system including a fluid delivery apparatus according to a third embodiment.
FIG. 10 is a flowchart of a method for modifying a fluid delivery apparatus according to an embodiment.

### DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

The same features can be indicated by the same reference numerals and not described in detail.

A fluid delivery apparatus according to an embodiment is configured to deliver a slurry liquid to be brought into contact with exhaust gas discharged from a combustion device (not shown) to a plurality of delivery destinations. Hereinafter, the fluid delivery apparatus used in an exhaust gas desulfurization device equipped with an absorption tower will be described as an example.

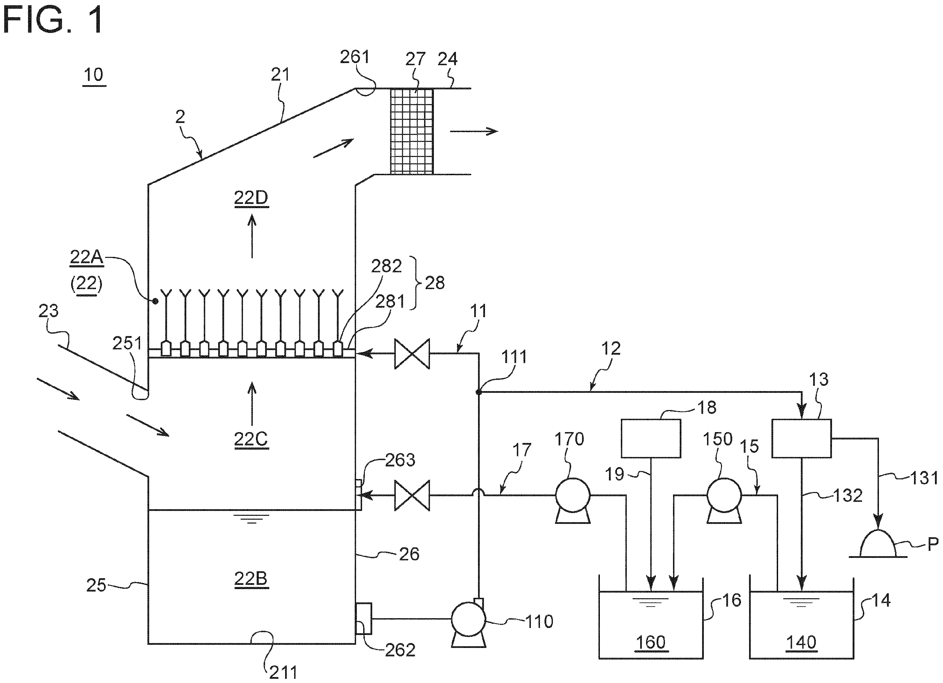

First, the basic configuration of the exhaust gas desulfurization device will be described based on FIG. 1.

FIG. 1 is a schematic configuration diagram of the exhaust gas desulfurization device.

As shown in FIG. 1, the exhaust gas desulfurization device 10 includes an absorption tower 2, an absorption liquid circulation line 11, a circulation pump 110 disposed in the absorption liquid circulation line 11, a gypsum slurry line 12, a separation device 13, a filtrate storage device 14, a filtrate line 15, a filtrate delivery pump 150 disposed in the filtrate line 15, a limestone slurry storage device 16, a limestone slurry line 17, and a supply pump 170 disposed in the limestone slurry line 17.

The absorption tower 2 (exhaust gas desulfurization device) is a device for desulfurizing exhaust gas discharged from a combustion device (not shown). In the illustrated embodiment, the absorption tower 2 is configured to desulfurize exhaust gas by the wet limestone-gypsum method. Examples of the combustion device include an engine such as a diesel engine, a gas turbine engine, or a steam turbine engine, and a boiler.

As shown in FIG. 1, the absorption tower 2 includes an absorption tower body 21 having an interior space 22 into which exhaust gas discharged from the combustion device is introduced.

In the illustrated embodiment, as shown in FIG. 1, the absorption tower 2 includes an exhaust gas introduction unit 23 for introducing the exhaust gas into the interior space 22, and an exhaust gas discharge unit 24 for discharging the exhaust gas from the interior space 22.

As shown in FIG. 1, the absorption tower body 21 internally defines a gas-liquid contact part 22A configured to bring the exhaust gas and an absorption liquid into gas-liquid contact by spraying limestone slurry (slurry liquid containing alkaline components) as the absorption liquid to the exhaust gas introduced into the gas-liquid contact part 22A, and a liquid reservoir 22B, disposed below the gas-liquid contact part 22A, for receiving the absorption liquid that has absorbed SOx in the exhaust gas by the gas-liquid contact part 22A. A space of the interior space 22 below the gas-liquid contact part 22A is referred to as a lower interior space 22C, and a space of the interior space 22 above the gas-liquid contact part 22A is referred to as an upper interior space 22D.

The direction in which the absorption tower body 21 and the exhaust gas introduction unit 23 are adjacent is defined as a first direction; the side adjacent to the exhaust gas introduction unit 23 in the first direction is defined as a first side; and the side adjacent to the exhaust gas discharge unit 24 in the first direction is defined as a second side.

As shown in FIG. 1, a side wall 25 of the absorption tower body 21 on the first side in the first direction has an exhaust gas introduction port 251 communicating with the lower interior space 22C. Further, a side wall 26 of the absorption tower body 21 on the second side in the first direction has an exhaust gas discharge port 261 communicating with the upper interior space 22D at a position higher than the exhaust gas introduction port 251.

The exhaust gas introduced from the combustion device to the exhaust gas introduction unit 23 passes through the exhaust gas introduction unit 23 and then is introduced into the interior space 22 (lower interior space 22C) through the exhaust gas introduction port 251. The exhaust gas introduced into the interior space 22 flows in the lower interior space 22C from the side wall 25 on the first side to the side wall 26 on the second side and then rises in the interior space 22. The exhaust gas that has risen to the upper interior space 22D flows from the side wall 25 to the side wall 26 and then is discharged to the exhaust gas discharge unit 24 through the exhaust gas discharge port 261.

As shown in FIG. 1, the gas-liquid contact part 22A has a spraying device 28 for spraying the absorption liquid to the interior space 22. The spraying device 28 is configured to spray the absorption liquid to the exhaust gas passing through the gas-liquid contact part 22A to bring the exhaust gas and the absorption liquid into gas-liquid contact in order to absorb and remove SOx (including SO₂) contained in the exhaust gas.

As shown in FIG. 1, the spraying device 28 includes a spray pipe 281 extending along the first direction in the interior space 22 of the absorption tower body 21 and a plurality of spray nozzles 282 disposed on the spray pipe 281. The spray nozzle 282 is configured to spray the absorption liquid to the downstream side in the flow direction of the exhaust gas, i.e., to the upper side in the vertical direction.

In the illustrated embodiment, the spray nozzle 282 is composed of a liquid column nozzle configured to inject a column of the absorption liquid. That is, the illustrated absorption tower 2 is a double contact flow absorber.

The absorption tower 2 is not limited to a double contact flow absorber as long as it is configured to bring the absorber into gas-liquid contact with the exhaust gas introduced into the absorption tower 2. For example, the absorption tower 2 may be a grid absorber including a packed layer packed with a packing material for promoting gas-liquid contact in the interior space 22, or may be a spray absorber including a spray nozzle configured to radially spray the absorption liquid.

Further, the spray pipe 281 may extend along the direction perpendicular to (intersecting) the first direction in a top view. The spray nozzle 282 may be configured to spray the absorption liquid to the lower side in the vertical direction.

On the downstream side of the gas-liquid contact part 22A in the exhaust gas flow direction, a mist eliminator 27 is disposed. The mist eliminator 27 is configured to remove moisture from the exhaust gas passing through the mist eliminator 27. The exhaust gas having passed through the mist eliminator 27 is discharged to the outside of the absorption tower 2.

In the illustrated embodiment, the mist eliminator 27 is arranged in the exhaust gas discharge unit 24 and extends along the vertical direction so as to separate the upstream side and the downstream side in the exhaust gas flow direction in the exhaust gas discharge unit 24. However, the mist eliminator 27 may be arranged in the upper interior space 22D and extend along the horizontal direction. Further, the mist eliminator 27 may have a multi-stage structure.

As shown in FIG. 1, the liquid reservoir 22B is configured to store the absorption liquid that has been sprayed to the exhaust gas introduced into the interior space 22. In the illustrated embodiment, the liquid reservoir 22B is disposed below the lower interior space 22C such that the liquid surface is positioned below the exhaust gas introduction port 251. The absorption liquid stored in the liquid reservoir 22B contains reaction products produced from SOx absorbed from the exhaust gas and oxidation products produced by oxidation of the reaction products. Examples of the reaction products include sulfites produced by the absorption of SO2 in the absorption liquid. Examples of the oxidation products include gypsum.

As shown in FIG. 1, the side wall 26 has an absorption liquid extraction port 262 near the bottom surface 211 of the liquid reservoir 22B in the vertical direction to extract the absorption liquid stored in the liquid reservoir 22B to the outside. The absorption liquid extraction port 262 communicates with the liquid reservoir 22B. Further, as shown in FIG. 1, the side wall 26 has an opening 263 for introducing the limestone slurry. The opening 263 communicates with the interior space 22.

As shown in FIG. 1, the absorption liquid circulation line 11 is a flow passage for delivering the absorption liquid stored in the liquid reservoir 22B to the spraying device 28. In the illustrated embodiment, the absorption liquid circulation line 11 is connected to the absorption liquid extraction port 262 and the spray pipe 281.

As shown in FIG. 1, the circulation pump 110 is configured to deliver the absorption liquid stored in the liquid reservoir 22B to the downstream side of the absorption liquid circulation line 11. At least part of the absorption liquid sprayed from the spraying device 28 and stored in the liquid reservoir 22B is pumped by the circulation pump 110, passes through the absorption liquid circulation line 11, and is fed to the spraying device 28.

As shown in FIG. 1, the gypsum slurry line 12 is a flow passage for delivering the absorption liquid stored in the liquid reservoir 22B to the separation device 13. In the illustrated embodiment, the gypsum slurry line 12 is connected to the separation device 13 and a bifurcation part 111 positioned on the downstream side (spraying device 28 side) of the circulation pump 110 in the absorption liquid circulation line 11. At least part of the absorption liquid sprayed from the spraying device 28 and stored in the liquid reservoir 22B is pumped by the circulation pump 110, passes through a portion of the absorption liquid circulation line 11 on the upstream side of the bifurcation part 111 and the gypsum slurry line 12, and is fed to the separation device 13.

As shown in FIG. 1, the separation device 13 is configured to separate a product P (oxidation product) produced in the absorption tower 2 from the absorption liquid. The product P separated from the absorption liquid by the separation device 13 passes through a product discharge line 131 and is discharged to the outside of the separation device 13. The filtrate obtained by separating the product P with the separation device 13 passes through a filtrate discharge line 132 and is delivered from the separation device 13 to the filtrate storage device 14.

As shown in FIG. 1, the filtrate storage device 14 (storage tank) has an interior space 140 and is configured to store the filtrate in the interior space 140.

As shown in FIG. 1, the filtrate line 15 is a flow passage for delivering the filtrate from the filtrate storage device 14 to the limestone slurry storage device 16.

As shown in FIG. 1, the filtrate delivery pump 150 is configured to deliver the filtrate from the filtrate storage device 14 to the limestone slurry storage device 16.

As shown in FIG. 1, the limestone slurry storage device 16 (storage tank) has an interior space 160 and is configured to store the limestone slurry (slurry liquid) in the interior space 160.

As shown in FIG. 1, the exhaust gas desulfurization device 10 includes a limestone storage device 18 (limestone silo) configured to store limestone (absorption agent), and a limestone supply line 19 for delivering limestone from the limestone storage device 18 to the limestone slurry storage device 16.

The limestone slurry storage device 16 may include a mixing device (not shown) configured to mix the filtrate with limestone to produce the limestone slurry.

As shown in FIG. 1, the limestone slurry line 17 is a flow passage for delivering the limestone slurry from the limestone slurry storage device 16 to the absorption tower 2. In the illustrated embodiment, as shown in FIG. 1, the limestone slurry line 17 is connected to the limestone slurry storage device 16 and the opening 263.

The supply pump 170 is configured to deliver the limestone slurry from the limestone slurry storage device 16 to the interior space 22 of the absorption tower body 21. The limestone slurry stored in the limestone slurry storage device 16 is pumped by the supply pump 170 and is delivered to the interior space 22 of the absorption tower body 21.

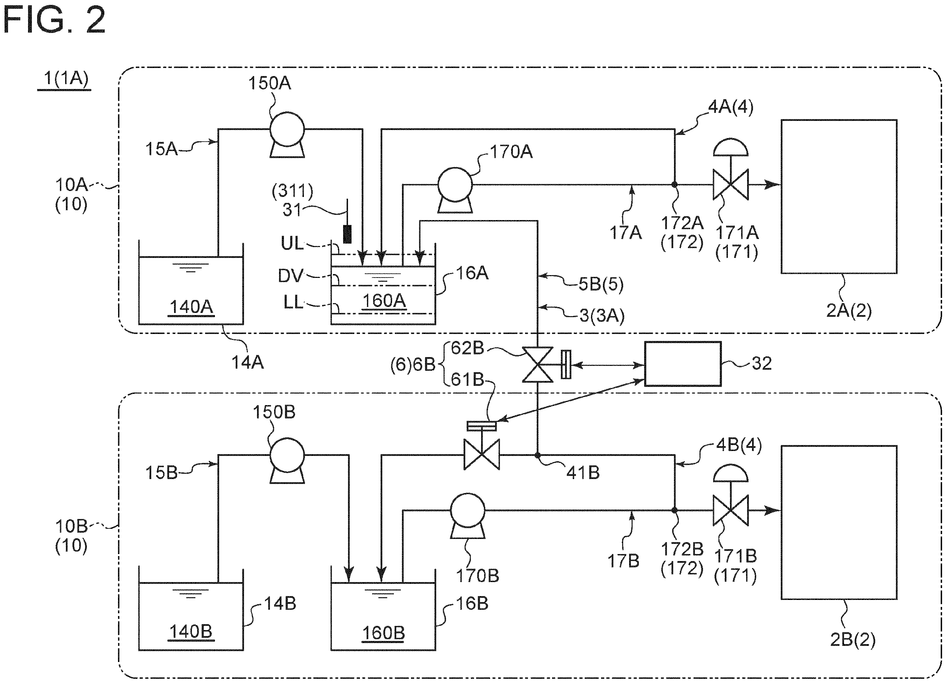

FIG. 2 is a schematic configuration diagram of an exhaust gas desulfurization system including a fluid delivery apparatus according to a first embodiment.

As shown in FIG. 2, an exhaust gas desulfurization system 1A (1) includes a first exhaust gas desulfurization device 10A (10) and a second exhaust gas desulfurization device 10B (10) different from the first exhaust gas desulfurization device 10A. In other words, the exhaust gas desulfurization system 1A includes two systems of exhaust gas desulfurization devices 10.

In the following, if a component of the exhaust gas desulfurization device 10, such as the absorption tower 2, is that of the first exhaust gas desulfurization device 10A, "first" may be added at the beginning and A at the sign, and if the component is that of the second exhaust gas desulfurization device 10B, "second" may be added at the beginning and B at the sign. For example, the absorption tower 2 of the first exhaust gas desulfurization device 10A is referred to as a first absorption tower 2A.

In the illustrated embodiment, as shown in FIG. 2, the first exhaust gas desulfurization device 10A includes a first limestone slurry storage device 16A, a first limestone slurry line 17A, a first supply pump 170A, and a first absorption tower 2A. Similarly, as shown in FIG. 2, the second exhaust gas desulfurization device 10B includes a second limestone slurry storage device 16B, a second limestone slurry line 17B, a second supply pump 170B, and a second absorption tower 2B.

The exhaust gas desulfurization device 10 (10A, 10B) includes a regulating valve 171 disposed on the downstream side (absorption tower 2 side) of the supply pump 170 in the limestone slurry line 17. The regulating valve 171 has a movable mechanism for opening and closing the limestone slurry line 17, which is the flow passage for the limestone slurry, and is configured to adjust the flow rate of the limestone slurry flowing through the limestone slurry line 17.

The amount of limestone slurry (slurry liquid) supplied to the absorption tower 2 fluctuates depending on the desulfurization load. For example, when the fuel has a low sulfur content or the load of the combustion device is low, since the desulfurization load is low, the amount of limestone slurry supplied to the absorption tower 2 decreases. When the supply amount (supply flow rate) of limestone slurry to the absorption tower 2 decreases, the flow velocity of limestone slurry flowing in the limestone slurry line 17 decreases, and solids in the limestone slurry may deposit in the limestone slurry line 17. The solids in the limestone slurry may adhere to the regulating valve 171 and reduce the responsiveness of the regulating valve 171.

As shown in FIG. 2, the exhaust gas desulfurization device 10 (10A, 10B) includes a return line 4, branching off from the limestone slurry line 17 at a bifurcation part 172 downstream of the supply pump 170 and upstream of the regulating valve 171, for returning the limestone slurry to the limestone slurry storage device 16. In the illustrated embodiment, the return line 4 is connected to the inlet side of the limestone slurry storage device 16 and the bifurcation part 172.

At least part of the limestone slurry flowing through the limestone slurry line 17 is pumped by the supply pump 170, passes through a portion of the limestone slurry line 17 on the upstream side of a bifurcation part 41 and the return line 4, and is returned to the limestone slurry storage device 16.

In the case where the supply amount of limestone slurry required in the absorption tower 2 is small, by decreasing the opening degree of the regulating valve 171, and flowing more limestone slurry than the required supply amount into the limestone slurry line 17 and returning the excess limestone slurry to the limestone slurry storage device 16 via the return line 4, the flow velocity of limestone slurry in the limestone slurry line 17 is prevented from falling below a predetermined speed.

For example as shown in FIG. 2, the fluid delivery apparatus 3 is mounted on the exhaust gas desulfurization system 1A.

As shown in FIG. 2, the fluid delivery apparatus 3 (3A) according to some embodiments is configured to deliver the limestone slurry (slurry liquid) from the second limestone slurry storage device 16B which is the delivery source to the second absorption tower 2B which is the first delivery destination and the first limestone slurry storage device 16A which is the second delivery destination.

As shown in FIG. 2, the fluid delivery apparatus 3 (3A) includes a second limestone slurry line 17B (first delivery line), a second return line 4B (return line), an auxiliary limestone slurry line 5B (second delivery line), and a delivery destination switching device 6B.

As shown in FIG. 2, the auxiliary limestone slurry line 5B (5) is a flow passage, branching off from the second return line 4B at a bifurcation part 41B, for delivering the limestone slurry to the first limestone slurry storage device 16A (second delivery destination). In the illustrated embodiment, the auxiliary limestone slurry line 5B is connected to the inlet side of the first limestone slurry storage device 16A and the bifurcation part 41B.

As shown in FIG. 2, the delivery destination switching device 6B (6) is configured to able to switch a delivery destination of the limestone slurry flowing on the upstream side of the bifurcation part 41B in the second return line 4B to the downstream side of the bifurcation part 41B in the second return line 4B or to the auxiliary limestone slurry line 5B. Herein, the expression "able to switch a delivery destination of the limestone slurry to ... or ..." includes not only the case where the delivery destination of the limestone slurry is completely switched by an open/close valve or the like to either one of the downstream side of the bifurcation part 41B in the second return line 4B or the auxiliary limestone slurry line 5B, but also the case where the delivery destination is set by a regulating valve or the like to both the downstream side of the bifurcation part 41B in the second return line 4B and the auxiliary limestone slurry line 5B.

In the illustrated embodiment, as shown in FIG. 2, the delivery destination switching device 6B includes a valve 61B disposed on the downstream side of the bifurcation part 41B in the second return line 4B and a valve 62B disposed in the auxiliary limestone slurry line 5B. Each of the valve 61B and the valve 62B may be an open/close valve or a flow-rate regulating valve. In other embodiments, the delivery destination switching device 6B may be a three-way valve disposed at the bifurcation part 41B.

As described above, the fluid delivery apparatus 3 (3A) according to some embodiments includes the second limestone slurry line 17B (first delivery line), the second return line 4B (return line), the auxiliary limestone slurry line 5B (second delivery line), and the delivery destination switching device 6 (6B) as shown in FIG. 2.

With the above configuration, the fluid delivery apparatus 3 (3A) provided with the auxiliary limestone slurry line 5B and the delivery destination switching device 6B can deliver the limestone slurry (slurry liquid) flowing on the upstream side of the bifurcation part 41B in the second return line 4B to the first limestone slurry storage device 16A (second delivery destination) different from the second absorption tower 2B (first delivery destination). In other words, it is possible to increase the number of delivery destinations of the limestone slurry flowing through the second return line 4B and deliver the limestone slurry flowing through the second return line 4B to the increased destinations.

Further, with the above configuration, since the number of delivery destinations of the limestone slurry flowing through the second return line 4B can be increased by the auxiliary limestone slurry line 5B branching off from the second return line 4B and the delivery destination switching device 6B, it is possible to prevent enlargement of the fluid delivery apparatus 3 (3A). Additionally, since the limestone slurry can be delivered from the same delivery source to multiple destinations of the limestone slurry, the number of sources of the limestone slurry can be reduced, which in turn prevents enlargement of the fluid delivery apparatus 3 (3A).

The fluid delivery apparatus 3 (3A) according to some embodiments further includes the second supply pump 170B, as shown in FIG. 2. The second supply pump 170B is configured to deliver the limestone slurry to the first limestone slurry storage device 16A (second delivery destination) when the delivery destination of the limestone slurry flowing on the upstream side of the bifurcation part 41B in the second return line 4B includes the auxiliary limestone slurry line 5B.

In this case, the limestone slurry is pumped by the supply pump 170, passes through the auxiliary limestone slurry line 5B, and is delivered to the first limestone slurry storage device 16A. Thus, since the necessity of a separate supply pump for delivering the limestone slurry to the first limestone slurry storage device 16A is eliminated, it is possible to prevent enlargement of the fluid delivery apparatus 3 (3A).

In some embodiments, as shown in FIG. 2, the fluid delivery apparatus 3 (3A) includes a storage amount acquisition device 31 to acquire the amount of limestone slurry stored in the first limestone slurry storage device 16A (second delivery destination), and a control device 32 configured to instruct the delivery destination switching device 6 (6B) where to deliver the limestone slurry according to the amount of limestone slurry acquired by the storage amount acquisition device 31.

In the illustrated embodiment, as shown in FIG. 2, the storage amount acquisition device 31 includes a level sensor 311 configured to detect the height of the liquid surface of the limestone slurry stored in the first limestone slurry storage device 16A.

As shown in FIG. 2, the control device 32 is an electronic control unit which controls the delivery destination switching device 6. The control device 32 may comprise a microcomputer including a central processing unit (CPU), a random access memory (RAM), a read only memory (ROM), and an I/O interface. Further, the control device 32 is configured to perform control based on signals measured by a sensor such as the level sensor 311 on the delivery destination switching device 6 (valves 61B, 62B, etc.).

With the above configuration, since the control device 32 instructs the delivery destination switching device 6 where to deliver the limestone slurry according to the amount of limestone slurry in the first limestone slurry storage device 16A (second delivery destination) acquired by the storage amount acquisition device 31, the amount of limestone slurry in the first limestone slurry storage device 16A can be made appropriate.

In some embodiments, as shown in FIG. 2, the control device 32 is configured to instruct the delivery destination switching device 6B to include the first limestone slurry storage device 16A as the delivery destination of the limestone slurry when the amount of limestone slurry acquired by the storage amount acquisition device 31 is less than a threshold LL. In this case, the amount of limestone slurry in the first limestone slurry storage device 16A can be prevented from becoming insufficient.

Further, in some embodiments, as shown in FIG. 2, the control device 32 is configured to instruct the delivery destination switching device 6B not to include the first limestone slurry storage device 16A as the delivery destination of the limestone slurry when the amount of limestone slurry acquired by the storage amount acquisition device 31 is more than a threshold UL. The threshold UL is larger than the threshold LL. In this case, the amount of limestone slurry in the first limestone slurry storage device 16A can be prevented from becoming excessive.

In some embodiments, each of the valve 61B and the valve 62B is a flow-rate regulating valve. The control device 32 is configured to adjust the opening degrees of the valve 61B and the valve 62B such that the amount of limestone slurry acquired by the storage amount acquisition device 31 approaches a target value DV. In this case, the amount of limestone slurry in the first limestone slurry storage device 16A can be made appropriate.

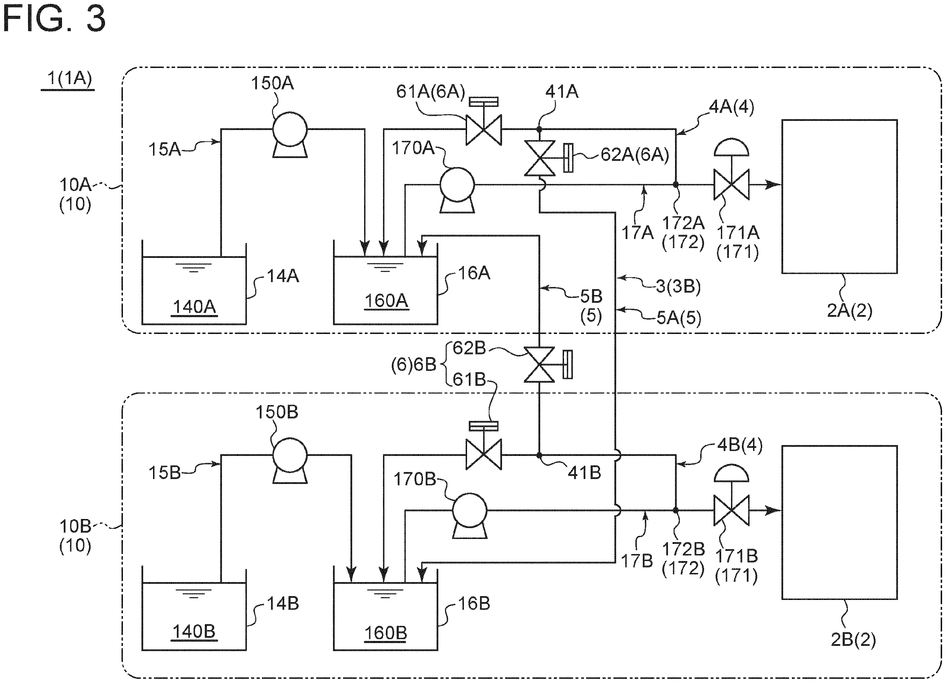

FIG. 3 is a schematic configuration diagram of an exhaust gas desulfurization system including a fluid delivery apparatus according to a first modification of the first embodiment.

As shown in FIG. 3, the fluid delivery apparatus 3 (3B) according to some embodiments is configured to deliver the limestone slurry (slurry liquid) from the first limestone slurry storage device 16A which is the second delivery destination to the second limestone slurry storage device 16B which is the delivery source.

As shown in FIG. 2, as with the fluid delivery apparatus 3A, the fluid delivery apparatus 3 (3B) includes a second limestone slurry line 17B (first delivery line), a second return line 4B (return line), an auxiliary limestone slurry line 5B (second delivery line), and a delivery destination switching device 6B. Additionally, as shown in FIG. 2, the fluid delivery apparatus 3 (3B) further includes a first limestone slurry line 17A, a first return line 4A (return line), an auxiliary limestone slurry line 5A, and a delivery destination switching device 6A.

As shown in FIG. 3, the auxiliary limestone slurry line 5A (5) is a flow passage, branching off from the first return line 4A at a bifurcation part 41A, for delivering the limestone slurry to the second limestone slurry storage device 16B (delivery source). In the illustrated embodiment, the auxiliary limestone slurry line 5A is connected to the inlet side of the second limestone slurry storage device 16B and the bifurcation part 41A.

As shown in FIG. 3, the delivery destination switching device 6A (6) is configured to able to switch a delivery destination of the limestone slurry flowing on the upstream side of the bifurcation part 41A in the first return line 4A to the downstream side of the bifurcation part 41A in the first return line 4A or to the auxiliary limestone slurry line 5A.

In the illustrated embodiment, as shown in FIG. 3, the delivery destination switching device 6A includes a valve 61A disposed on the downstream side of the bifurcation part 41A in the first return line 4A and a valve 62A disposed in the auxiliary limestone slurry line 5A. Each of the valve 61A and the valve 62A may be an open/close valve or a flow-rate regulating valve. In other embodiments, the delivery destination switching device 6A may be a three-way valve disposed at the bifurcation part 41A.

Further, in the illustrated embodiment, the fluid delivery apparatus 3 (3B) further includes the first supply pump 170A, as shown in FIG. 3. The first supply pump 170A is configured to deliver the limestone slurry to the second limestone slurry storage device 16B (delivery source) when the delivery destination of the limestone slurry flowing on the upstream side of the bifurcation part 41A in the first return line 4A includes the auxiliary limestone slurry line 5A.

With the above configuration, the fluid delivery apparatus 3 (3B) provided with the auxiliary limestone slurry lines 5A, 5B and the delivery destination switching devices 6A, 6B can deliver the limestone slurry (slurry liquid) flowing on the upstream side of the bifurcation part 41B in the second return line 4B to the first limestone slurry storage device 16A (second delivery destination) different from the second absorption tower 2B (first delivery destination), and further deliver the limestone slurry (slurry liquid) flowing on the upstream side of the bifurcation part 41A in the first return line 4A to the second limestone slurry storage device 16B (delivery source). In other words, the exhaust gas desulfurization devices 10A, 10B can deliver the limestone slurry (slurry liquid) to each other.

Further, with the above configuration, since each of the exhaust gas desulfurization devices 10A, 10B need not have an individual spare unit for the limestone slurry storage device 16, it is possible to prevent enlargement of the fluid delivery apparatus 3 (3B).

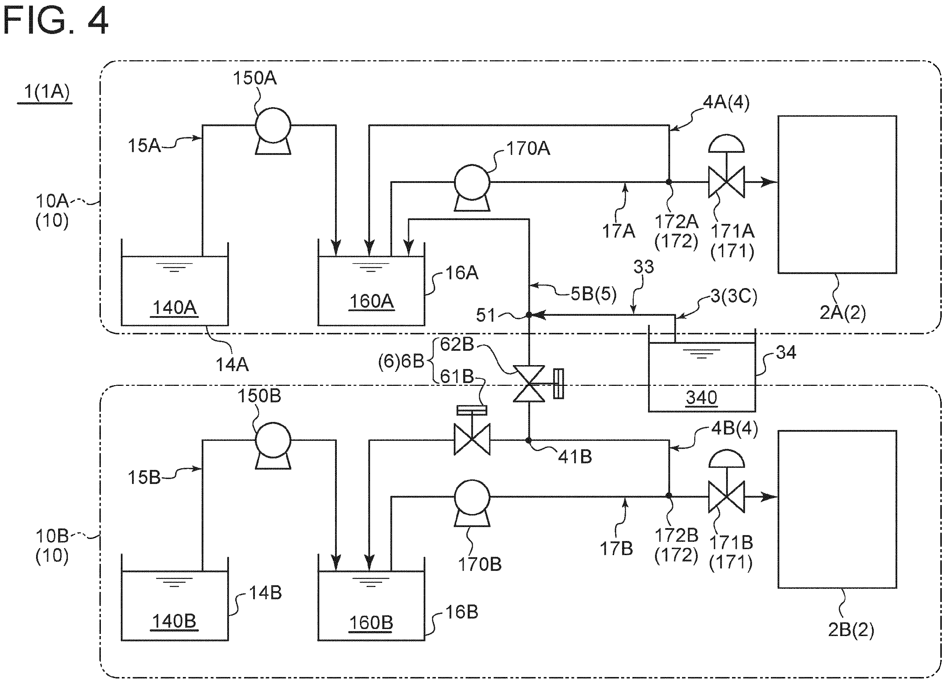

FIG. 4 is a schematic configuration diagram of an exhaust gas desulfurization system including a fluid delivery apparatus according to a second modification of the first embodiment.

The fluid delivery apparatus 3 (3C) according to some embodiments further includes a washing line 33 configured to deliver a washing liquid to the auxiliary limestone slurry line 5B (second delivery line), as shown in FIG. 4. Examples of the washing liquid include industrial water.

In the illustrated embodiment, as shown in FIG. 4, the fluid delivery apparatus 3C includes a washing liquid storage device 34 (storage tank) having an interior space 340 and configured to store the washing liquid in the interior space 340. As shown in FIG. 4, the washing line 33 connects a junction 51 positioned downstream of the delivery destination switching device 6B in the auxiliary limestone slurry line 5B and the washing liquid storage device 34. The washing liquid flows through the washing line 33 from the washing liquid storage device 34 and is delivered to the auxiliary limestone slurry line 5B.

When the delivery destination of the limestone slurry flowing through the second return line 4B is set by the delivery destination switching device 6B to the second limestone slurry storage device 16B which is the delivery source of the limestone slurry, the slurry liquid remaining in the auxiliary limestone slurry line 5B may settle. The settling of the limestone slurry remaining in the auxiliary limestone slurry line 5B may lead to blockage of the auxiliary limestone slurry line 5B and an increase in pressure loss.

With the above configuration, the washing liquid is delivered to the auxiliary limestone slurry line 5B by the washing line 33 to forcibly discharge the limestone slurry remaining in the auxiliary limestone slurry line 5B, so that the limestone slurry remaining in the auxiliary limestone slurry line 5B is prevented from settling, which in turn prevents blockage of the auxiliary limestone slurry line 5B and an increase in pressure loss.

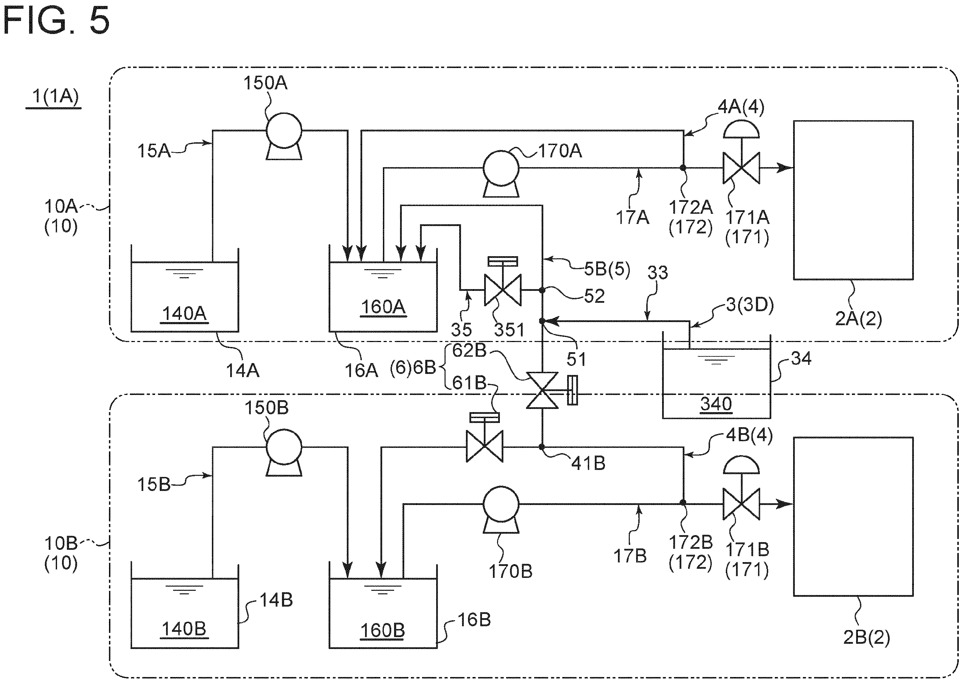

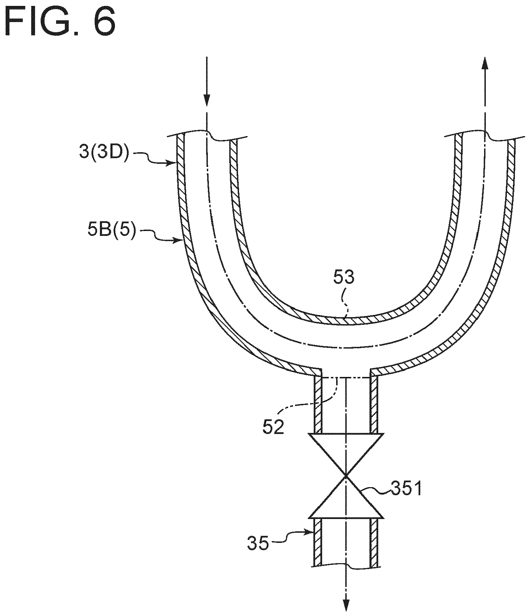

FIG. 5 is a schematic configuration diagram of an exhaust gas desulfurization system including a fluid delivery apparatus according to a third modification of the first embodiment. FIG. 6 is a cross-sectional view showing a schematic configuration of connection between a drain line and a second delivery line for describing the drain line.

In some embodiments, as shown in FIG. 6, the auxiliary limestone slurry line 5B (second delivery line) includes at least one concave portion 53 at which the slope of the auxiliary limestone slurry line 5B changes from downward to upward. Further, as shown in FIG. 5, the fluid delivery apparatus 3 (3D) includes a drain line 35 connecting the concave portion 53 and a portion of the first limestone slurry storage device 16A (second delivery destination) at a height lower than the concave portion 53. As shown in FIG. 5, the drain line 35 is a flow passage for delivering the limestone slurry from the at least one concave portion 53 to the first limestone slurry storage device 16A (second delivery destination).

In the illustrated embodiment, as shown in FIG. 6, the concave portion 53 of the auxiliary limestone slurry line 5B has a bifurcation part 52. As shown in FIGs. 5 and 6, the drain line 35 is connected to the bifurcation part 52 and a portion of the first limestone slurry storage device 16A at a height lower than the concave portion 53. The drain line 35 has a downward slope from the bifurcation part 52 to a portion of the first limestone slurry storage device 16A at a height lower than the concave portion 53. As shown in FIG. 5, the fluid delivery apparatus 3 (3D) includes an open/close valve 351 disposed in the drain line 35 and configured to open and close the drain line 35.

The concave portion at which the slope of the auxiliary limestone slurry line 5B (second delivery line) changes from downward to upward is where the limestone slurry (slurry liquid) tends to settle, causing blockage of the auxiliary limestone slurry line 5B and an increase in pressure loss.

With the above configuration, by using the difference in height between the concave portion 53 and the portion of the first limestone slurry storage device 16A (second delivery destination) lower than the concave portion 53, the limestone slurry in the concave portion 53 can be delivered to the first limestone slurry storage device 16A through the drain line 35 by the weight of the limestone slurry. Thus, with the above configuration, it is possible to suppress settling of the limestone slurry at the concave portion 53 where the limestone slurry tends to settle, thus effectively preventing blockage of the auxiliary limestone slurry line 5B and an increase in pressure loss.

In some embodiments, the auxiliary limestone slurry line 5B (second delivery line) for example as shown in FIG. 2 has a downward slope from the bifurcation part 41B to the first limestone slurry storage device 16A (second delivery destination). In this case, since the auxiliary limestone slurry line 5B has a downward slope from the bifurcation part 41B to the first limestone slurry storage device 16A, by using the difference in height between the bifurcation part 41B and the first limestone slurry storage device 16A, the limestone slurry (slurry liquid) remaining in the auxiliary limestone slurry line 5B can be delivered to the first limestone slurry storage device 16A by the weight of the limestone slurry. Further, with the above configuration, even without a device for forcibly discharging the limestone slurry from the auxiliary limestone slurry line 5B like the washing line 33, the limestone slurry can be discharged from the auxiliary limestone slurry line 5B, so that it is possible to prevent enlargement of the fluid delivery apparatus 3.

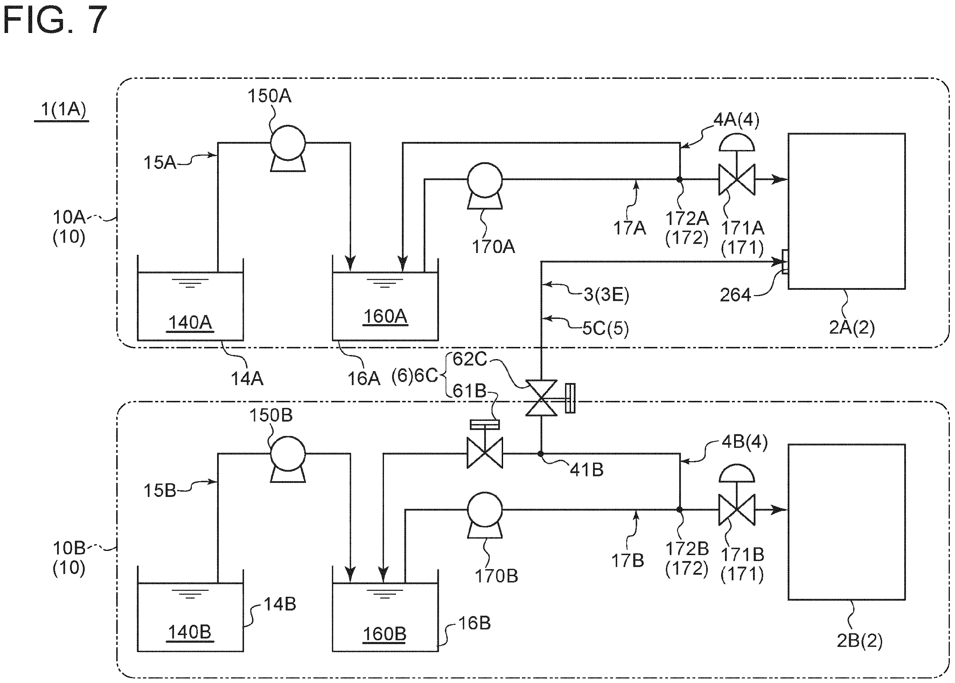

FIG. 7 is a schematic configuration diagram of an exhaust gas desulfurization system including a fluid delivery apparatus according to a fourth modification of the first embodiment.

As shown in FIG. 7, the fluid delivery apparatus 3 (3E) according to some embodiments is configured to deliver the limestone slurry (slurry liquid) from the second limestone slurry storage device 16B which is the delivery source to the second absorption tower 2B which is the first delivery destination and the first absorption tower 2A which is the second delivery destination.

As shown in FIG. 7, the fluid delivery apparatus 3 (3E) includes the second limestone slurry line 17B (first delivery line), the second return line 4B (return line), an auxiliary limestone slurry line 5C (second delivery line), and a delivery destination switching device 6C.

As shown in FIG. 7, the auxiliary limestone slurry line 5C (5) is a flow passage, branching off from the second return line 4B at a bifurcation part 41B, for delivering the limestone slurry to the first absorption tower 2A (second delivery destination). In the illustrated embodiment, the auxiliary limestone slurry line 5C is connected to the inlet side (opening 264) of the first absorption tower 2A and the bifurcation part 41B.

As shown in FIG. 7, the delivery destination switching device 6C (6) is configured to able to switch a delivery destination of the limestone slurry flowing on the upstream side of the bifurcation part 41B in the second return line 4B to the downstream side of the bifurcation part 41B in the second return line 4B or to the auxiliary limestone slurry line 5C (second delivery line).

In the illustrated embodiment, as shown in FIG. 7, the delivery destination switching device 6C includes a valve 61B disposed on the downstream side of the bifurcation part 41B in the second return line 4B and a valve 62C disposed in the auxiliary limestone slurry line 5C. Each of the valve 61B and the valve 62C may be an open/close valve or a flow-rate regulating valve. In other embodiments, the delivery destination switching device 6C may be a three-way valve disposed at the bifurcation part 41B.

With the above configuration, the fluid delivery apparatus 3 (3E) provided with the auxiliary limestone slurry line 5C and the delivery destination switching device 6C can deliver the limestone slurry (slurry liquid) flowing on the upstream side of the bifurcation part 41B in the second return line 4B to the first absorption tower 2A (second delivery destination) different from the second absorption tower 2B (first delivery destination).

In the fluid delivery apparatus 3 (3A to 3E) according to the above-described embodiments, for example as shown in FIGs. 2 and 7, the first delivery destination is the second absorption tower 2B (first absorption tower), and the second delivery destination is the first absorption tower 2A (second absorption tower) or the first limestone slurry storage device 16A configured to store the limestone slurry (slurry liquid) to be delivered to the first absorption tower 2A.

With the above configuration, the limestone slurry (slurry liquid) to be delivered to the second absorption tower 2B can be delivered to the first absorption tower 2A (or the first limestone slurry storage device 16A) different from the second absorption tower 2B. If there is a device (e.g., first filtrate storage device 14A) for delivering the limestone slurry to the first absorption tower 2A (or the first limestone slurry storage device 16A) separately from the fluid delivery apparatus 3, the fluid delivery apparatus 3 can be used as a backup for this device. By using the fluid delivery apparatus 3 as a backup for this device, the reliability of the exhaust gas desulfurization system 1A equipped with the absorption tower 2 and the fluid delivery apparatus 3 can be improved. In addition, since the necessity of a separate spare unit for the device is eliminated, it is possible to prevent enlargement of the exhaust gas desulfurization system 1A.

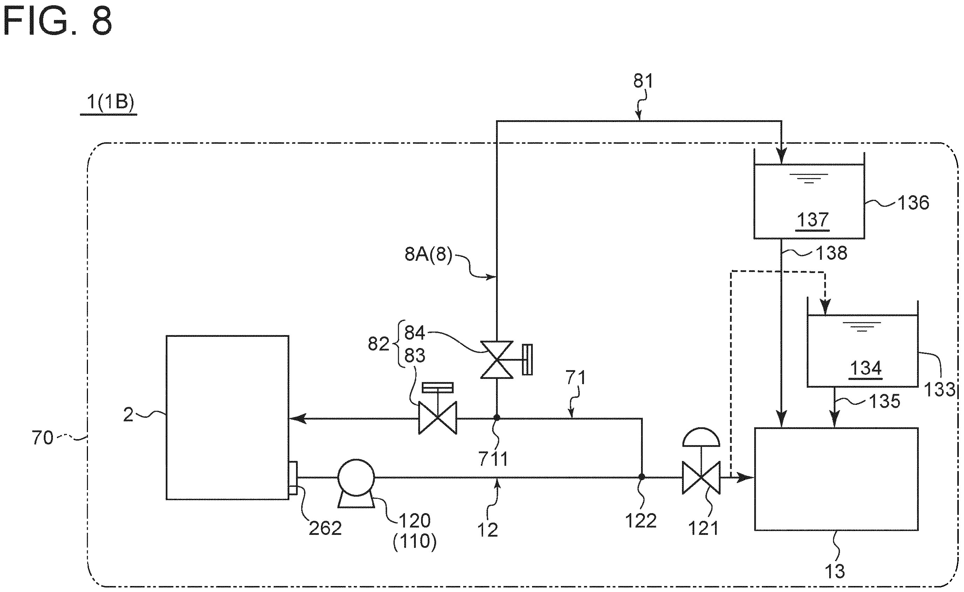

FIG. 8 is a schematic configuration diagram of an exhaust gas desulfurization system including a fluid delivery apparatus according to a second embodiment.

In some embodiments, as shown in FIG. 8, the exhaust gas desulfurization system 1B (1) includes an exhaust gas desulfurization device 70.

As shown in FIG. 8, the exhaust gas desulfurization device 70 includes an absorption tower 2 (delivery source), a gypsum slurry line 12 (first delivery line), a gypsum slurry supply pump 120 (circulation pump 110) disposed in the gypsum slurry line 12, a regulating valve 121 disposed on the downstream side (separation device 13 side) of the gypsum slurry supply pump 120 in the gypsum slurry line 12, a separation device 13 (first delivery destination), a gypsum slurry return line 71 (return line), a gypsum slurry storage device 133, a gypsum slurry introduction line 135, an auxiliary gypsum slurry storage device 136, and an auxiliary gypsum slurry introduction line 138.

As shown in FIG. 8, the gypsum slurry return line 71 is a flow passage, branching off from the gypsum slurry line 12 at a bifurcation part 122 downstream of the gypsum slurry supply pump 120 and upstream of the regulating valve 121, for returning the gypsum slurry (slurry liquid) to the absorption tower 2. In the illustrated embodiment, the gypsum slurry return line 71 is connected to the bifurcation part 122 and the absorption tower 2.

Further, in the illustrated embodiment, the gypsum slurry line 12 is connected to the absorption liquid extraction port 262 and the upstream side of the separation device 13. As shown in FIG. 1, the gypsum slurry line 12 may be shared with the absorption liquid circulation line 11 on the upstream side of the bifurcation part 111.

As shown in FIG. 8, the gypsum slurry storage device 133 has an interior space 134 and is configured to store the gypsum slurry in the interior space 134. The gypsum slurry introduction line 135 is configured to introduce the gypsum slurry from the gypsum slurry storage device 133 to the separation device 13.

As shown in FIG. 8, the auxiliary gypsum slurry storage device 136 has an interior space 137 and is configured to store the gypsum slurry in the interior space 137. The auxiliary gypsum slurry introduction line 138 is configured to introduce the gypsum slurry from the auxiliary gypsum slurry storage device 136 to the separation device 13.

The fluid delivery apparatus 8 is mounted on the exhaust gas desulfurization system 1B.

As shown in FIG. 8, the fluid delivery apparatus 8 (8A) according to some embodiments is configured to deliver the gypsum slurry (slurry liquid) from the absorption tower 2 which is the delivery source to the separation device 13 which is the first delivery destination and the auxiliary gypsum slurry storage device 136 which is the second delivery destination.

As shown in FIG. 8, the fluid delivery apparatus 8 (8A) includes a gypsum slurry line 12 (first delivery line), a gypsum slurry return line 71 (return line), an auxiliary gypsum slurry line 81 (second delivery line), and a delivery destination switching device 82. In an embodiment, the auxiliary gypsum slurry storage device 136 and the auxiliary gypsum slurry introduction line 138 are included in the fluid delivery apparatus 8 (8A) rather than the exhaust gas desulfurization device 70.

As shown in FIG. 8, the auxiliary gypsum slurry line 81 is a flow passage, branching off from the gypsum slurry return line 71 at a bifurcation part 711, for delivering the gypsum slurry to the auxiliary gypsum slurry storage device 136 (second delivery destination) different from the gypsum slurry storage device 133. In the illustrated embodiment, the auxiliary gypsum slurry line 81 is connected to the bifurcation part 711 and the inlet side of the auxiliary gypsum slurry storage device 136.

As shown in FIG. 8, the delivery destination switching device 82 is configured to able to switch a delivery destination of the gypsum slurry flowing on the upstream side of the bifurcation part 711 in the gypsum slurry return line 71 to the downstream side of the bifurcation part 711 in the gypsum slurry return line 71 or to the auxiliary gypsum slurry line 81.

In the illustrated embodiment, as shown in FIG. 8, the delivery destination switching device 82 includes a valve 83 disposed on the downstream side of the bifurcation part 711 in the gypsum slurry return line 71 and a valve 84 disposed in the auxiliary gypsum slurry line 81. Each of the valve 83 and the valve 84 may be an open/close valve or a flow-rate regulating valve. In other embodiments, the delivery destination switching device 82 may be a three-way valve disposed at the bifurcation part 711.

In an embodiment, as shown by the dotted line in FIG. 8, the gypsum slurry line 12 (first delivery line) is a flow passage for delivering the gypsum slurry to the gypsum slurry storage device 133 not the separation device 13.

In some embodiments, as shown in FIG. 8, the first delivery destination is the separation device 13 configured to separate a product P (see FIG. 1) produced in the absorption tower 2 from the slurry liquid, or the gypsum slurry storage device 133 configured to store the slurry liquid to be delivered to the separation device 13. The second delivery destination is the auxiliary gypsum slurry storage device 136 configured to store the slurry liquid to be delivered to the separation device 13.

With the above configuration, the gypsum slurry to be delivered to the separation device 13 (or the gypsum slurry storage device 133) can be delivered to the auxiliary gypsum slurry storage device 136. As with the gypsum slurry storage device 133, the auxiliary gypsum slurry storage device 136 can store the gypsum slurry to be delivered to the separation device13. Thus, the auxiliary gypsum slurry storage device 136 can be used as a backup for the gypsum slurry storage device 133. By using the auxiliary gypsum slurry storage device 136 as a backup for the gypsum slurry storage device 133, the reliability of the exhaust gas desulfurization system 1B equipped with the separation device 13 and the gypsum slurry storage device 133 can be improved.

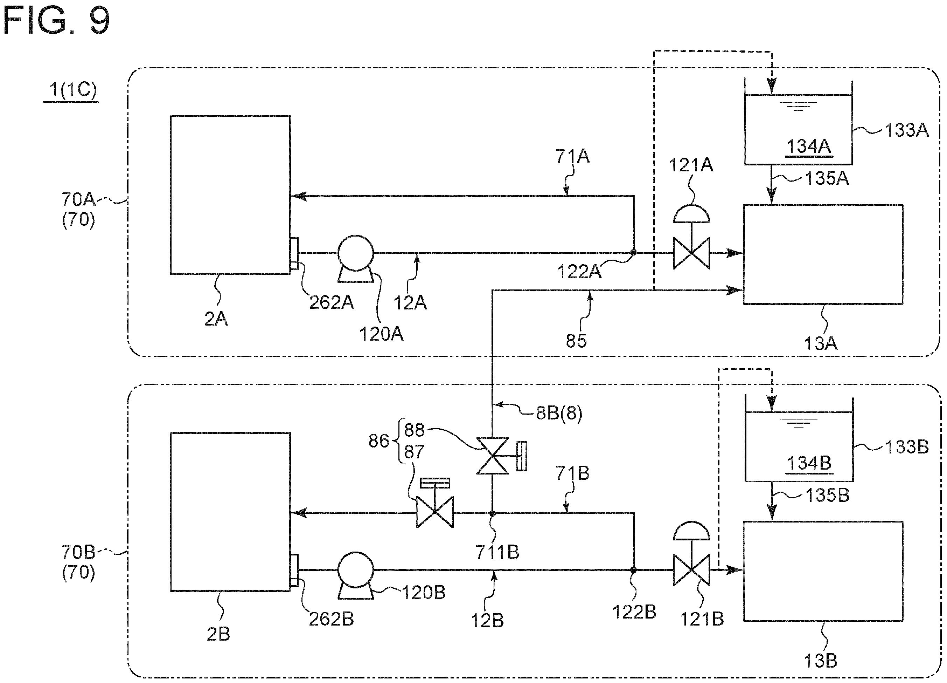

FIG. 9 is a schematic configuration diagram of an exhaust gas desulfurization system including a fluid delivery apparatus according to a third embodiment.

As shown in FIG. 9, an exhaust gas desulfurization system 1C (1) includes a first exhaust gas desulfurization device 70A (70) and a second exhaust gas desulfurization device 70B (70) different from the first exhaust gas desulfurization device 70A. In other words, the exhaust gas desulfurization system 1C includes two systems of exhaust gas desulfurization devices 70.

As shown in FIG. 9, the fluid delivery apparatus 8 (8B) according to some embodiments is configured to deliver the gypsum slurry (slurry liquid) from the second absorption tower 2B which is the delivery source to the second separation device 13B which is the first delivery destination and the first gypsum slurry storage device 133A which is the second delivery destination.

As shown in FIG. 9, the fluid delivery apparatus 8 (8B) includes a second gypsum slurry line 12B (first delivery line), a second gypsum slurry return line 71B (return line), an auxiliary gypsum slurry line 85 (second delivery line), and a delivery destination switching device 86.

As shown in FIG. 9, the auxiliary gypsum slurry line 85 is a flow passage, branching off from the second gypsum slurry return line 71B at a second bifurcation part 711B, for delivering the gypsum slurry to the first separation device 13A (second delivery destination). In the illustrated embodiment, the auxiliary gypsum slurry line 85 is connected to the bifurcation part 711B and the inlet side of the first separation device 13A. In an embodiment, as shown by the dotted line in FIG. 9, the auxiliary gypsum slurry line 85 is a flow passage for delivering the gypsum slurry to the first gypsum slurry storage device 133A not the first separation device 13A.

As shown in FIG. 9, the delivery destination switching device 86 is configured to able to switch a delivery destination of the gypsum slurry flowing on the upstream side of the bifurcation part 711B in the second gypsum slurry return line 71B to the downstream side of the bifurcation part 711B in the second gypsum slurry return line 71B or to the auxiliary gypsum slurry line 85.

In the illustrated embodiment, as shown in FIG. 9, the delivery destination switching device 86 includes a valve 87 disposed on the downstream side of the bifurcation part 711B in the second gypsum slurry return line 71B and a valve 88 disposed in the auxiliary gypsum slurry line 85. Each of the valve 87 and the valve 88 may be an open/close valve or a flow-rate regulating valve. In other embodiments, the delivery destination switching device 86 may be a three-way valve disposed at the bifurcation part 711B.

In an embodiment, as shown by the dotted line in FIG. 9, the second gypsum slurry line 12B (first delivery line) is a flow passage for delivering the gypsum slurry to the second gypsum slurry storage device 133B not the second separation device 13B.

In some embodiments, as shown in FIG. 9, the first delivery destination is the second separation device 13B or the second gypsum slurry storage device 133B. The second delivery destination is the first separation device 13A or the first gypsum slurry storage device 133A.

With the above configuration, the gypsum slurry to be delivered to the second separation device 13B (or the second gypsum slurry storage device 133B) can be delivered to the first separation device 13A (or the first gypsum slurry storage device 133A). Thus, the second separation device 13B can be used as a backup for the first separation device 13A. By using the second separation device 13B as a backup for the first separation device 13A, the reliability of the exhaust gas desulfurization system 1 equipped with the separation device 13 (13A, 13B) and the fluid delivery apparatus 8 can be improved. In addition, since the necessity of providing the separation device 13 separately for each exhaust gas desulfurization system 70 is eliminated, it is possible to prevent enlargement of the exhaust gas desulfurization system 1.

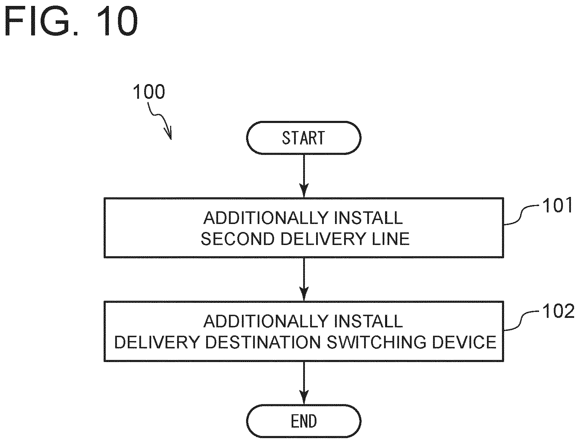

FIG. 10 is a flowchart of a method for modifying a fluid delivery apparatus according to an embodiment.

The fluid delivery apparatus modification method 100 according to some embodiments is to modify a fluid delivery apparatus (e.g., fluid delivery apparatus 3, 8) configured to deliver a slurry liquid to at least one delivery destination.

The fluid delivery apparatus according to the present embodiment includes the first delivery line (e.g., second limestone slurry line 17B, second gypsum slurry line 12B), and the return line (e.g., second return line 4B, second gypsum slurry return line 71B).

The fluid delivery apparatus modification method 100 includes a second delivery line addition step 101 of additionally installing the second delivery line (auxiliary limestone slurry line 5, auxiliary gypsum slurry line 81, 85) and a delivery destination switching device addition step 102 of additionally installing the delivery destination switching device (delivery destination switching device 6, 82, 86).

With the above method, by the second delivery line (auxiliary limestone slurry line 5, auxiliary gypsum slurry lines 81, 85) installed in the second delivery line addition step 101 and the delivery destination switching device (delivery destination switching devices 6, 82, 86) installed in the delivery destination switching device addition step 102, the slurry liquid flowing on the upstream side of the bifurcation part (e.g., bifurcation parts 41B, 711B) in the return line (e.g., second return line 4B, second gypsum slurry return line 71B) can be delivered to the second delivery destination (e.g., first gypsum slurry storage device 16A) different from the first delivery destination (e.g., second absorption tower 2B). In other words, it is possible to increase the number of delivery destinations of the slurry liquid flowing through the return line and deliver the slurry liquid flowing through the return line to the increased destinations. Thus, with the above method, since the number of delivery destinations of the slurry liquid flowing through the return line can be increased by the second delivery line addition step 101 and the delivery destination switching device addition step 102, it is possible to easily perform modification and prevent enlargement of the fluid delivery apparatus (e.g., fluid delivery apparatus 3, 8).

The present invention is not limited to the embodiments described above, but includes modifications to the embodiments described above, and embodiments composed of combinations of those embodiments.

### Reference Signs List

- 1, 1A to 1C: Exhaust gas desulfurization system
- 2, 2A, 2B: Absorption tower
- 21: Absorption tower body
- 211: Bottom surface
- 22: Interior space
- 22A: Gas-liquid contact part
- 22B: Liquid reservoir
- 22C: Lower interior space
- 22D: Upper interior space
- 23: Exhaust gas introduction unit
- 24: Exhaust gas discharge unit
- 25, 26: Side wall
- 251: Exhaust gas introduction port
- 261: Exhaust gas discharge port
- 262: Absorption liquid extraction port
- 263: Opening
- 27: Mist eliminator
- 28: Spraying device
- 281: Spray pipe
- 282: Spray nozzle
- 3, 3A to 3E, 8, 8A, 8B: Fluid delivery apparatus
- 31: Storage amount acquisition device
- 311: Level sensor
- 32: Control device
- 4: Return line
- 5A: Auxiliary limestone slurry line
- 6: Delivery destination switching device
- 61,62: Valve
- 10, 70: Exhaust gas desulfurization device
- 11: Absorption liquid circulation line
- 110: Circulation pump
- 111: Bifurcation part
- 12: Gypsum slurry line
- 13: Separation device
- 131: Product discharge line
- 132: Filtrate discharge line
- 133: Gypsum slurry storage device
- 135: Gypsum slurry introduction line
- 136: Auxiliary gypsum slurry storage device
- 138: Auxiliary gypsum slurry introduction line
- 14: Filtrate storage device
- 140: Interior space
- 15: Filtrate line
- 150: Filtrate delivery pump
- 16: Limestone slurry storage device
- 160: Interior space
- 17: Limestone slurry line
- 170: Supply pump
- 171: Regulating valve
- 172: Bifurcation part
- 18: Limestone storage device
- 19: Limestone supply line
- 100: Method for modifying fluid delivery apparatus
- 101: Second delivery line addition step
- 102: Delivery destination switching device addition step
- DV: Target value
- LL, UL: Threshold
- P: Product

## Claims

1. A fluid delivery apparatus configured to deliver a slurry liquid to be brought into contact with exhaust gas discharged from a combustion device to a plurality of delivery destinations, comprising:
a first delivery line for delivering the slurry liquid from a delivery source to a first delivery destination;
a return line, branching off from the first delivery line at a first bifurcation part, for returning the slurry liquid to the delivery source;
a second delivery line, branching off from the return line at a second bifurcation part, for delivering the slurry liquid to a second delivery destination different from the first delivery destination; and
a delivery destination switching device configured to able to switch a delivery destination of the slurry liquid flowing on an upstream side of the second bifurcation part in the return line to a downstream side of the second bifurcation part in the return line or to the second delivery line.

2. The fluid delivery apparatus according to claim 1, further comprising a washing line configured to deliver a washing liquid to the second delivery line.

3. The fluid delivery apparatus according to claim 1 or 2,
wherein the second delivery line includes at least one concave portion at which a slope of the second delivery line changes from downward to upward, and
wherein the fluid delivery apparatus further comprises a drain line connecting the at least one concave portion and a portion of the second delivery destination at a height lower than the concave portion.

4. The fluid delivery apparatus according to claim 1 or 2,
wherein the second delivery line has a downward slope from the second bifurcation part to the second delivery destination.

5. The fluid delivery apparatus according to any one of claims 1 to 4,
wherein the first delivery destination includes a first absorption tower, and
wherein the second delivery destination includes a second absorption tower different from the first absorption tower, or a second storage device configured to store the slurry liquid to be delivered to the second absorption tower.

6. The fluid delivery apparatus according to any one of claims 1 to 4,
wherein the first delivery destination includes a first separation device configured to separate a product produced in a first absorption tower from the slurry liquid, or a third storage device configured to store the slurry liquid to be delivered to the first separation device, and
wherein the second delivery destination includes a second separation device configured to separate a product produced in a second absorption tower different from the first absorption tower from the slurry liquid, or a fourth storage device configured to store the slurry liquid to be delivered to the second separation device.

7. The fluid delivery apparatus according to any one of claims 1 to 4,
wherein the first delivery destination includes a separation device configured to separate a product produced in an absorption tower from the slurry liquid, or a fifth storage device configured to store the slurry liquid to be delivered to the separation device, and
wherein the second delivery destination includes a sixth storage device different from the fifth storage device and configured to store the slurry liquid to be delivered to the separation device.

8. A method for modifying a fluid delivery apparatus configured to deliver a slurry liquid to be brought into contact with exhaust gas discharged from a combustion device to at least one delivery destination,
the fluid delivery apparatus comprising:
a first delivery line for delivering the slurry liquid from a delivery source to a first delivery destination; and
a return line, branching off from the first delivery line at a first bifurcation part, for returning the slurry liquid to the delivery source,
the method comprising:
a second delivery line addition step of additionally installing a second delivery line, branching off from the return line at a second bifurcation part, for delivering the slurry liquid to a second delivery destination different from the first delivery destination; and
a delivery destination switching device addition step of additionally installing a delivery destination switching device configured to able to switch a delivery destination of the slurry liquid flowing on an upstream side of the second bifurcation part in the return line to a downstream side of the second bifurcation part in the return line or to the second delivery line.
